# EUROPEAN PATENT SPECIFICATION

(11) **EP 0 515 551 B1**
(45) Date of publication and mention of the grant of the patent: **10.05.1995**
(21) Application number: 91905248.0
(22) Date of filing: 22.02.1991
(51) Int. Cl.: B01D 53/34, F23G 1/00

(54) **METHOD AND MEANS FOR REMOVING MERCURY FROM THE FUMES FROM AN INCINERATOR**
METHODE UND MITTEL ZUR ENTFERNUNG VON QUECKSILBER AUS DEN ABGASEN EINER MÜLLVERBRENNUNGSANLAGE
PROCEDE ET DISPOSITIF D'ELIMINATION DU MERCURE CONTENU DANS LA FUMEE D'UN INCINERATEUR

(30) Priority: 22.02.1990 SE 9000630
(43) Date of publication of application: 02.12.1992
(73) Proprietor: VON PLATEN, Magnus Hubert, 201 25 Malmö (SE)
(72) Inventor: VON PLATEN, Magnus Hubert, 201 25 Malmö (SE)
(74) Representative: Ström, Tore
(86) International application number: SE9100150
(87) International publication number: WO9112877

(56) References cited:
- SE-B- 463 653

## Description

The present invention relates to a method for removing mercury from the fumes from an incinerator, and to means for working the method. The term incinerator as referred to herein includes primarily cremation furnaces but also furnaces of other types which are used for burning dangerous waste from hospitals and other sources.

Mercury is used to a considerable extent in the dental care as a constituent of amalgam for dental repairing, which is prepared of about 50 % mercury and 50 % so called "alloy" a powder containing silver, tin, copper and zinc. Due to the poisonousness of the mercury and the tendency thereof to cause in some cases so called galvanism the use of amalgam as material for repairing teeth is being questioned and amalgam has been replaced to a great extent by other combinations of material. However, many individuals have today tooth fillings of amalgam containing a varying amount of mercury. The amount of mercury varies with the age of the individual substantially as follows:
In the ages below 30 years - 10 g mercury in tooth fillings.
In the ages 30 to 55 years - 15 g mercury in tooth fillings.
In the ages above 56 years - 5 g mercury in tooth fillings.

Cremation has been applied in Sweden for more than 100 years, and during this time minor changes only have been made in the construction of cremation furnaces. The emission from these furnaces is just as impure today as 100 years ago but is considerably more dangerous in view of the content thereof, particularly the presence of mercury which comes from the amalgam fillings of the bodies being cremated. Nowadays nearly 60 %, in the larger built-up areas in the neighbourhood of 90 %, of all deceased persons are cremated, or expressed as an absolute figure 55000 persons/year. The number of cremations is increasing rapidly, and in view of the fact that individuals in the ages from 30 to 55 years have today to a maximum extent repairings with amalgam in the teeth, the mercury emission from the crematories will increase up to the year 2020. This involves an expanding environmental threat. Since the crematories are located in the larger built-up areas - there are totally 75 crematories operating in Sweden at present - the concentration as such may create an environmental problem. Thus, there are in the Swedish province Skåne 10 crematories performing today about 9125 cremations per year. It is estimated that there will be emitted by cremations 10.6 g mercury at each cremation in the year 2020, and that the number of cremations in Skåne then will be 13925 per year. If nothing is done about the mercury emission the crematories in Skåne thus will emit nearly 150 kg mercury to the atmosphere in the year 2020 or as much as all crematories in the country emitted for in the year 1980.

After the industry having been obliged to take steps in order to reduce the emission of mercury, the cremation furnaces now appear to be the last remaining source of completely impured emission of mercury originating from amalgam tooth fillings which emit mercury vapour escaping with the fumes from the cremation furnace and being spread in the surroundings, which in the long run constitutes a serious environmental risk. This is illustrated by the fact that the concentration of mercury in the fumes from a cremation furnace during the emission period which is no longer than about 4 minutes of each cremation taking about one hour, can be as much as 375 mg/nm³, which should be compared with the mercury content of fumes from industrial applications, which is for energy production 0.001 mg/nm³ and for waste combustion 0.5 mg/nm³. The mercury content of the fumes from the crematories thus is considerably higher than that of the fumes from other combustion plants.

The invention is based on the knowledge that the very high concentration of mercury in the fumes from a cremation furnace exists for a very short period, nearly momentarily, viz. as mentioned above for about 4 minutes, and therefore conventional methods of cleaning fumes, such as filtration, condensation, washing etc., cannot be applied.

It is known, however, that the element selenium can be used in order to bind mercury. Selenium has a boiling temperature of about 690^{o}C, and amalgam is estimated to release the mercury at a temperature above 650^{o}C. Selenium in gas phase has a very great tendency to combine with mercury in gas phase, mercury selenide being formed, which is a very stable and pro-environmental composition. One method of removing mercury from fumes by reaction between the mercury and selenium supplied is disclosed in SE-B-463 653. In that case selenium is supplied to the fumes as elementary selenium by using a vehicle of gas. Considering the short time for the emission of mercury at a cremation this method cannot be applied, however, for removing mercury from the fumes from a cremation furnace.

The method of the invention for removing mercury from fumes from an incincerator is based on supply of elementary selenium at a temperature necessary for reaction between mercury and selenium, and in order to effect instantaneous capture of large quantities of mercury the method of the invention has obtained the characterising features of claim 1.

The means proposed according to the invention for working the method is defined in claim 4.

In order to explain the invention in more detail an illustrative embodiment thereof will be described with reference to the accompanying drawing, in which
FIG. 1 is an axial cross sectional view of a capsule for working the method of the invention, and
FIG. 2 is a perspective view illustrating the use of the capsule.

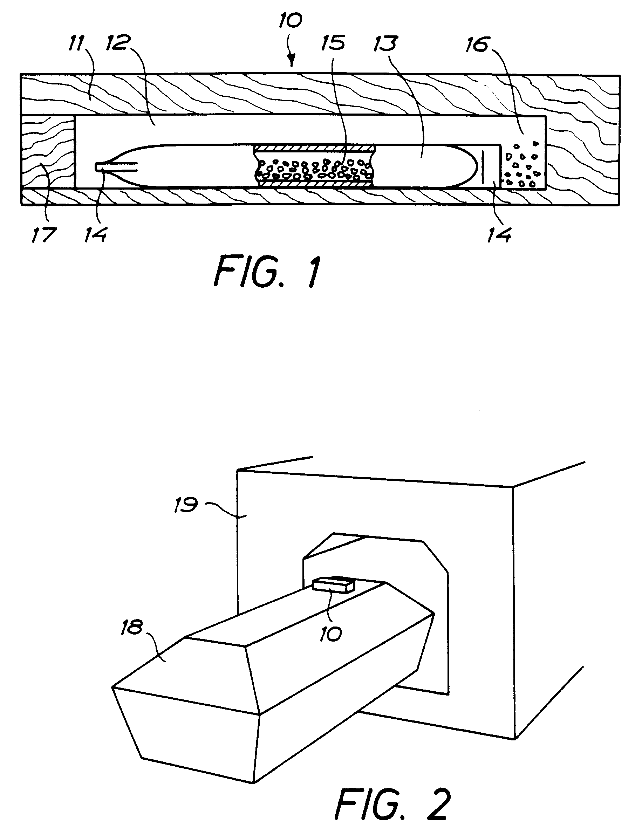

The capsule according to FIG. 1, designated generally at 10, comprises a parallel epipedic wooden block 11 having a bottom hole 12 drilled from one end thereof, which is not located centrally but is displaced towards the bottom side of the block.

A tube 13 of aluminium is inserted into the bottom hole, said tube being closed at the ends thereof by being flattened at 14 after having been filled with elementary selenium in the form of powder and/or grains 15. A minor quantity of elementary selenium 16 is introduced into the bottom hole 12 but outside the aluminium tube 13. The bottom hole is closed by means of a plug 17 of wood or other suitable material.

Since the molecular weight of mercury is 200.61 while the molecular weight of selenium is 78.96, 3.95 g selenium are required in order to bind 10 g mercury. Since the quantity of mercury at a cremation will be emitted during a period of about 4 min. it is estimated that the selenium has to be emitted during a period of 5 min. and must be able to bind during this period existing mercury independently of the time at which the mercury appears during said period of 5 min. It is estimated that 2 g selen will be consumed per minute or 10 g for each cremation.

In order to work the method of the invention the capsule described is located on the cover of a coffin 18 as shown in FIG. 2 at the head end of the coffin. The coffin is inserted into the cremation furnace 19 after the furnace having been heated to a temperature of 700^{o}C which is the loading or insertion temperature. After about 10 min. in the cremation furnace the yaw bone of the body has been heated to a temperature of about 650^{o}C so that existing amalgam will melt and the mercury included therein will be evaporated because elementary mercury has a boiling temperature of 357^{o}C, and will escape very rapidly with the fumes. At this time the wooden block 11 the temperature resistance of which is substantially the same as that of the coffin, will have been destroyed and the aluminium tube 13 having a melting temperature of 658^{o}C will have melted so that the selenium has been released. The selenium which has a boiling temperature of about 690^{o}C will be evaporated but considerably slower than the mercury and will escape with the fumes, the mercury and the selenium binding chemically to each other in the fumes, sublimating to mercury selenide which due to the high specific gravity thereof (8.3) will not be carried away by the fumes but will fall to the bottom of the combustion space. Mercury selenide is a harmless chemical composition which will remain in the cremation furnace to be removed therefrom later and to be buried or spread with the ash of the cremated body.

By using the capsule described in working the method of the invention the emission of selenium in the cremation furnace thus will be synchronized with the release of mercury vapour from existing amalgam fillings.

The method of the invention can be applied by using the capsule described also in other incinerators than cremation furnaces, e.g. in furnaces for burning dangerous waste from hospitals and other institutions, which can contain mercury for example in the form of amalgam waste from the treatment of teeth. Then, a capsule is placed in the furnace at each loading thereof with waste.

The method of the invention is not limited to the use of the capsule described because the selenium can be enclosed in another way in order to be released at a predetermined temperature. The essential feature of the invention is that the selenium will take care of existing mercury instantaneously already at the source so that no specific treatment of the fumes in order to separate mercury therefrom is necessary.

## Claims

1. Method for removing mercury, from fumes from an incinerator by supplying elementary selenium for reaction between mercury and selenium in the gas phase by sublimation to mercury selenide at a temperature below the evaporation temperature of selenium, **characterized** in that the mercury is bound to amalgam and the selenium is supplied to the incinerator at the loading thereof enclosed in a capsule (13) disintegrating at a temperature below the evaporation temperature of selenium for release of gaseous selenium in the combustion chamber space simultaneously as the mercury evaporates from the material that is incinerated.

2. Method as in claim 1 for treating fumes from a cremation furnace, **characterized** in that the capsule (13) is located on the cover of a coffin (18) to be cremated.

3. Method as in claim 2, **characterized** in that the capsule (13) is located at the head end of the coffin cover.

4. Means for removing mercury, from fumes from an incinerator by reaction between mercury and selenium in the gas phase by sublimation to mercury selenide at a temperature below the evaporation temperature of selenium, **characterized** by a capsule (13) enclosing the selenium (15) in elementary form, to be supplied to the incinerator (19) at the loading thereof to remove mercury bound to amalgam, said capsule consisting of a material which disintegrates at a temperature below the evaporation temperature of selenium for release of gaseous selenium in the combustion chamber space simultaneously as the mercury evaporates from the material that is incinerated.

5. Means according to claim 4, **characterized** in that the capsule comprises an enclosure (13) consisting of aluminium.

6. Means according to claim 5, **characterized** in that the aluminium enclosure (13) is contained in a wooden block (11).

7. Means according to claim 6, **characterized** in that a minor amount of elementary selenium (16)is enclosed inside the wooden block (11) but outside the aluminium capsule (13).

## Patentansprüche

1. Verfahren zur Entfernung von Quecksilber aus den Abgasen einer Verbrennungsanlage durch Zugabe elementaren Selens für die Reaktion zwischen Quecksilber und Selen in der Gasphase durch Sublimation zu Quecksilberselenid bei einer Temperatur unterhalb der Verdampfungstemperatur von Selen, dadurch gekennzeichnet, daß
das Quecksilber in Amalgam gebunden ist, und das Selen in die Verbrennungsanlage bei deren Beschickung, eingeschlossen in einer Kapsel (13), die sich bei einer Temperatur unterhalb der Verdampfungstemperatur von Selen zersetzt, zugegeben wird, um gasförmiges Selen gleichzeitig mit der Quecksilberverdampfung in den Brennkammerraum freizugeben.

2. Verfahren nach Anspruch 1, zur Behandlung von Abgasen eines Einäscherungsofens, dadurch gekennzeichnet, daß sich die Kapsel (13) auf dem Deckel eines zu verbrennenden Sarges (18) befindet.

3. Verfahren nach Anspruch 2, dadurch gekennzeichnet, daß sich die Kapsel (13) am Kopfende des Sargdeckels befindet.

4. Vorrichtung zur Entfernung von Quecksilber aus den Abgasen einer Verbrennungsanlage mittels Reaktion zwischen Quecksilber und Selen in der Gasphase durch Sublimation zu Quecksilberselenid bei einer Temperatur unterhalb der Verdampfungstemperatur von Selen, gekennzeichnet durch eine Kapsel (13), die das Selen (15) in elementarer Form einschließt, und die in die Verbrennungsanlage (19) bei deren Beschickung zugegeben wird, um das im Amalgam gebundene Quecksilber zu entfernen, wobei die Kapsel aus einem Material besteht, das sich bei einer Temperatur unterhalb der Verdampfungstemperatur von Selen zersetzt, um gasförmiges Selen gleichzeitig mit der Quecksilberverdampfung in den Brennkammerraum freizugeben.

5. Vorrichtung nach Anspruch 4, dadurch gekennzeichnet, daß die Kapsel eine aus Aluminium bestehende Umhüllung (13) enthält.

6. Vorrichtung nach Anspruch 5, dadurch gekennzeichnet, daß die Aluminiumumhüllung (13) in einem Holzblock (11) enthalten ist.

7. Vorrichtung nach Anspruch 6, dadurch gekennzeichnet, daß eine kleinere Menge elementaren Selens (16) im Inneren des Holzblocks (11), aber außerhalb der Aluminiumkapsel (13), eingeschlossen ist.

## Revendications

1. Procédé pour extraire du mercure à partir de fumées provenant d'un incinérateur, en fournissant du sélénium sous forme élémentaire en vue d'une réaction entre le mercure et le sélénium dans la phase gazeuse, par sublimation du séléniure de mercure à une température inférieure à la température d'évaporation du sélénium, caractérisé en ce que le mercure est lié à un amalgame et le sélénium est fournit à l'incinérateur, lors du chargement de celui-ci, en étant enfermé dans une capsule (13) se désintégrant à une température inférieure à la température d'évaporation du sélénium, afin de libérer le sélénium gazeux, dans l'espace de la chambre de combustion, en même temps que le mercure s'évapore.

2. Procédé suivant la revendication 1 pour le traitement de fumées provenant d'un four crématoire, caractérisé en ce que la capsule (13) est placée sur le couvercle d'un cercueil (18) devant être brûlé.

3. Procédé suivant la revendication 2 caractérisé en ce que la capsule (13) est placée à l'endroit de l'extrémité de tête du couvercle du cercueil.

4. Moyen pour extraire du mercure à partir de fumées provenant d'un incinérateur, par réaction entre le mercure et du sélénium dans la phase gazeuse, par sublimation du séléniure de mercure à une température inférieure à la température d'évaporation du sélénium, caractérisé par une capsule (13) enfermant le sélénium (15) sous forme élémentaire, cette capsule étant destinée à être fournie à l'incinérateur (19) au moment de son chargement, afin d'extraire le mercure lié à un amalgame, et consistant en un matériau qui se désintègre à une température inférieure à la température d'évaporation du sélénium, afin de libérer le sélénium gazeux, dans l'espace de la chambre de combustion, en même temps que le mercure s'évapore.

5. Moyen suivant la revendication 4 caractérisé en ce que la capsule comprend une enveloppe (13) réalisée en aluminium.

6. Moyen suivant la revendication 5 caractérisé en ce que l'enveloppe (13) en aluminium est contenue dans un bloc de bois (11).

7. Moyen suivant la revendication 6 caractérisé en ce qu'une petite quantité de sélénium sous forme élémentaire (16) est enfermée à l'intérieur du bloc de bois (11) mais à l'extérieur de la capsule en aluminium (13).
